# EUROPEAN PATENT SPECIFICATION

(11) **EP 3 976 718 B1**
(45) Date of publication and mention of the grant of the patent: **28.01.2026**
(21) Application number: 20719767.4
(22) Date of filing: 24.03.2020
(51) Int. Cl.: C09D 11/38

(54) **WATER-BASED INK FOR INK-JET RECORDING AND INK-JET RECORDING APPARATUS**
WASSERBASIERTE TINTE ZUR TINTENSTRAHLAUFZEICHNUNG UND TINTENSTRAHLAUFZEICHNUNGSGERÄT
ENCRE À BASE D'EAU POUR ENREGISTREMENT À JET D'ENCRE ET APPAREIL D'ENREGISTREMENT À JET D'ENCRE

(30) Priority: 31.05.2019 JP 2019102153
(43) Date of publication of application: 06.04.2022
(73) Proprietor: Brother Kogyo Kabushiki Kaisha, Nagoya, Aichi 467-8561 (JP)
(72) Inventor: KURIKI, Hirofumi, Nagoya-shi, Aichi 467-8562 (JP); HIGASHIYAMA, Shunichi, Nagoya-shi, Aichi 467-8562 (JP); NAGANO, Taro, Nagoya-shi, Aichi 467-8562 (JP)
(74) Representative: Kuhnen & Wacker Patent- und Rechtsanwaltsbüro PartG mbB
(86) International application number: PCT/JP2020/013084
(87) International publication number: WO 2020/241018

(56) References cited:
- EP-A1- 1 193 301
- EP-A1- 3 196 258
- EP-A1- 3 196 262
- WO-A1-2013/131924
- US-A1- 2005 036 021
- US-A1- 2014 017 461
- US-A1- 2017 283 630
- US-A1- 2018 086 930

## Description

### [Technical Field]

The present invention relates to a water-based ink for ink-jet recording and an ink-jet recording apparatus.

### [Background Art]

There is proposed a water-based ink containing a vinyl chloride-acrylic based copolymer, as a water-based ink for ink-jet recording which has an excellent fixing property to coated paper, etc. (Patent Literature 1).
US 2017/283630 A1 discloses an aqueous ink for inkjet recording comprises a colorant and water, the colorant comprising a pigment and a dye represented by a formula. The aqueous ink for inkjet recording also comprises a water-soluble resin.
US 2018/086930 A1 discloses an aqueous ink for ink jet recording, an aqueous ink set for ink jet recording, and an ink jet recording method.
EP 1 193 301 A1 discloses an ink compositions which, when used with an ink jet recording apparatus, can realize excellent ink ejection stability while maintaining safety and satisfactory penetration of ink. The ink composition according to the present invention comprises at least a colorant, a humectant, a glycol monoether as a penetrating agent, a 1,2-alkanediol, and water, the weight ratio of the glycol monoether to the 1,2-alkanediol being in the range of 1 : 5 to 5 : 1. According to another aspect of the present invention, there is provided an ink composition comprising at least a pigment, a dispersant for dispersing the pigment, a 1,2-alkanediol, and water as a main solvent, the content of the 1,2-alkanediol being 0.5 to 10% by weight based on the total amount of the ink composition.
EP 3 196 258 A1 discloses an ink including a self-dispersible pigment, acrylic resin particles, a water-soluble organic solvent, and water. The self-dispersible pigment includes a phosphonic-acid-based self-dispersible pigment having a phosphonic acid group bonded directly or via another atomic group to a surface of particles of the pigment. The acrylic resin particles are formed of an acrylic resin containing a constituent unit derived from an ester-bond-containing monomer. The content of the constituent unit derived from the ester-bond-containing monomer in the acrylic resin is 60 mol% or more based on the total of the acrylic resin.
US 2014/017461 A1 discloses an ink composition that contains a quinacridone-based pigment, a dispersant, a hydrosoluble solvent, and water, wherein the ink composition satisfies the following relations: 0.050 ≦ X/Y ≦ 0.120 and 0.700 ≦ Z/Y ≦ 1.050, X representing a minimum absorbance in a wavelength range of from 400 nm to 450 nm, Y representing an absorbance of a maximum peak in a wavelength range of from 500 nm to 550 nm, and Z representing an absorbance of a maximum peak in a wavelength range of from 550 nm to 600 nm.
US 2005/036021 A1 discloses an ink set that can realize printing of images having excellent image reproduction, color reproduction, and fixation. The ink set comprises a black ink composition and a chromatic color ink composition, wherein the black ink composition comprises at least a surface-treated pigment dispersible and/or dissolvable in water without any dispersant, resin particles having a film forming temperature below 0°C, resin particles having a film forming temperature of 30°C or above, and water as a main solvent, and the chromatic color ink composition comprises at least a pigment, a polymer, which includes the pigment and renders the pigment dispersible in the ink composition, and water as a main solvent.
EP 3 196 262 A1 discloses an ink containing a pigment, a water-soluble organic solvent, and an acetylene glycol-based nonionic surfactant, and having a viscosity at 25°C of 5 mPa·s or more. The ink has a static surface tension of 27.1 mN/m or more and 35.0 mN/m or less, which is measured at 25°C by a Wilhelmy method. The ink also has a dynamic surface tension at a bubble life time of 150 msec of 30.5 mN/m or more and 37.0 mN/m or less, which is measured at 25°C by a maximum bubble pressure method.
WO 2013/131924 A1 discloses an ink composition suitable for being ejected from an inkjet marking device at an operating temperature. The ink composition comprises a water-dispersible resin and has a dynamic surface tension of below 35 mN/m and a static surface tension of above 21 mN/m both determined at the operating temperature. The ink composition may comprise a mixture of water-soluble organic solvents having a difference in the relative dielectric constant of more than 5, preferably between 10 and 50. The ink composition may comprise a polymeric cosolvent, in particular a polyethylene glycol or polyethylene glycol (di)methyl ether. The ink composition may comprise a mixture of surfactants comprising at least one surfactant of a first type selected from the group consisting of acetylene glycols and ethoxylated acetylene glycols and at least one surfactant of a second type selected from the group consisting of silicone surfactants and fluorochemical surfactants.

### [Citation List]

### [Patent Literature]

[PATENT LITERATURE 1] Japanese Patent Application Laid-open No. 2014-19811

### [Summary]

### [Technical Problem]

There is a demand, however, for a new water-based ink for ink-jet recording which has a satisfactory wettability with respect to a recording medium having hydrophobicity such as coated paper, plastic, film, etc., of which ink droplet spreads on a surface of the hydrophobic recording medium, and which is capable of filling a predetermined area of the hydrophobic recording medium with a small amount thereof.

In view of the above situation, an object of the present invention is to provide a new water-based ink for ink-jet recording which has a satisfactory wettability with respect to a recording medium having hydrophobicity, of which ink droplet spreads on a surface of the hydrophobic recording medium, and which is capable of filling, with a small amount thereof, a predetermined area of the hydrophobic recording medium.

### [Solution to the Problem]

According to a first aspect of the present invention, there is provided a water-based ink for ink-jet recording, including:
a water-soluble organic solvent;
water; and
a surfactant having solubility in the water at 20°C in a range of 0.05% by mass to 0.2% by mass, a content amount of the surfactant in an entire amount of the water-based ink is in the range of 1.2% by mass to 2.7% by mass, and wherein the surfactant includes at least polyoxyethylene-based surfactant.

According to a second aspect of the present invention, there is provided an ink-jet recording apparatus including:
an ink storing part storing the water-based ink for ink-jet recording of the first aspect; and
an ink discharging mechanism configured to discharge the ink stored in the ink storing part.

### [Advantageous Effects of Invention]

Since the water-based ink for ink-jet recording related to the present invention includes not less than 1.2% by mass of a hydrophobic surfactant which has solubility in the water at 20°C in a range of 0.05% by mass to 0.2% and which is hardly dissolved in the water, the water-based ink related to the present invention has a satisfactory wettability with respect to a recording medium having hydrophobicity, of which ink droplet spreads on a surface of the hydrophobic recording medium, and which is capable of filling, with a small amount thereof, a predetermined area of the hydrophobic recording medium.

### [Brief Description of Drawings]

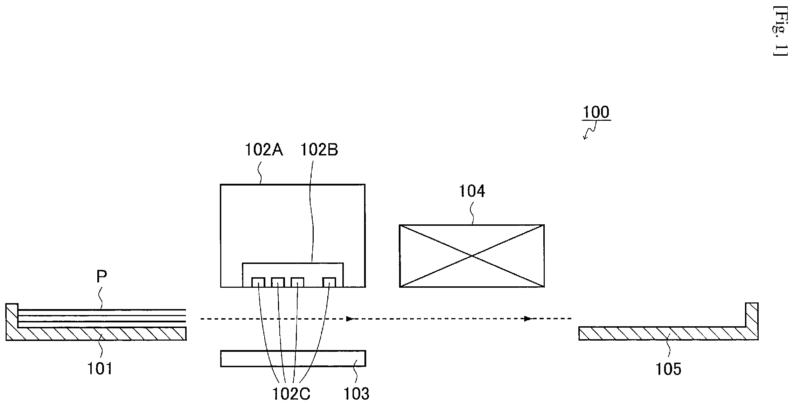

[Fig. 1] Fig. 1 is a schematic view depicting the configuration of an example of an ink-jet recording apparatus related to the present invention.

### [Description of Embodiments]

In the present invention, a phrase such as a "surfactant having solubility in water at 20°C, that is X% by mass" means a surfactant of which maximum amount to dissolve in (100-X) g of water at 20°C is Xg. For example, a phrase such as "surfactant having solubility in water at 20°C, that is 0.2% by mass" means a surfactant of which maximum amount to dissolve in 99.8 g of water at 20°C is 0.2 g.

A water-based ink for ink-jet recording related to the present invention (hereinafter also referred to as a "water-based ink" or an "ink", in some cases) is suitably usable in an ink-jet recording onto a recording medium having hydrophobicity such as, for example, coated paper, plastic, film, an OHP sheet, etc., but is not limited to or restricted by this usage. The water-based ink for ink-jet recording related to the present invention is also usable, for example, in the ink-jet recording onto a recoding medium which is different from the hydrophobic recording medium and which includes, for example, regular paper (plain paper), glossy paper, mat paper, etc. In the present invention, the term "coated paper" means, for example, paper obtained by coating, with a coating agent, regular paper of which main constituent is pulp, such as high-grade print paper and middle-grade print paper. The coating agent is applied to the regular paper to improve its smoothness, whiteness, brightness, etc. The coated paper is exemplified by high-grade coated paper, middle-grade coated paper, etc.

The water-based ink related to the present invention will be explained. The water-based ink related to the present invention contains a surfactant, a water-soluble organic solvent and water.

The surfactant is such a hydrophobic surfactant wherein the solubility in the water at 20°C is in the range of 0.05% by mass to 0.2% by mass, and is hardly dissolved to water. The surfactant includes a polyoxyethylene-based surfactant. A commercial available product may be used as the surfactant. The commercially available product is exemplified, for example, by: "OLFINE (trade name) E1004" (acetylene glycol-based) and "SURFYNOL (trade name) 440" (acetylene glycol-based) which are produced by NISSHIN CHEMICAL CO., LTD.; "EMULGEN (trade name) 106" (polyoxyethylene lauryl ether) and "EMULGEN (trade name) 705" (polyoxyethylene alkyl ether) which are produced by KAO CORPORATION; "NONION P-210" (polyoxyethylene cetyl ether) produced by NOF CORPORATION; "ACETYLENOL (trade name) E40" (acetylene glycol-based) produced by KAWAKEN FINE CHEMICALS CO., LTD.; etc. The surfactant may have the solubility in water at 20°C, for example, in a range of 0.05% by mass to 0.1% by mass. In the present invention, the term "acetylene glycol-based surfactant" means a surfactant which is an acetylene glycol-based compound having polyoxyethylene chain or no polyoxyethylene chain; and the term "polyoxyethylene-based surfactant" means a surfactant which is not the acetylene glycol-based compound and which has polyoxyethylene chain.

The content amount of the hydrophobic surfactant in the entire amount of the water-based ink is not less than 1.2% by mass. By containing not less than 1.2% by mass of the hydrophobic surfactant, the water-based ink has a satisfactory wettability with respect to a hydrophobic recording medium, an ink droplet of the water-based ink spreads on a surface of the hydrophobic recording medium, and a small amount of the water-based ink is capable of filling a predetermined area in the hydrophobic recording medium. The upper limit of the content amount of the hydrophobic surfactant is not particularly limited. Since the hydrophobic surfactant is required to be dissolved in the water-based ink, the upper limit is, for example, in a range of approximately 4% by mass to approximately 5% by mass, although depending on the blending amount(s) of other component(s), such as the above-described water-soluble organic solvent, etc. Namely, the content amount of the hydrophobic surfactant in the entire amount of the water-based ink may be not more than 5% by mass, or not more than 4% by mass. Accordingly, the content amount of the hydrophobic surfactant in the entire amount of the water-based ink may be, for example, in a range of 1.2% by mass to 5% by mass, in a range of 2% by mass to 4% by mass, in a range of 2% by mass to 2.7% by mass, or in a range of 1.3 by mass to 2.5% by mass.

It is allowable that only the hydrophobic surfactant is contained in the water-based ink, as the surfactant thereof. Alternatively, the water-based ink may further contain, in addition to the hydrophobic surfactant, another surfactant which is different from the hydrophobic surfactant.

The water-soluble organic solvent may include at least one selected from the group consisting of: propylene glycol, 1,3-butanediol, tripropylene glycol (hereinafter referred to as "TPG", in some cases) and diethylene glycol (hereinafter referred to as "DEG", in some cases). The above-listed water-soluble organic solvents may function, for example, as a humectant which prevents the water-based ink from drying at an end of a nozzle in an ink-jet head. The content amount of the water-soluble organic solvent in the entire amount of the water-based ink may be, for example, not less than 10% by mass. The upper limit of the content amount of the water-soluble organic solvent is not particularly limited, and the upper limit value may be, for example, not more than 50% by mass. Further, from the viewpoint of allowing the hydrophobic surfactant to dissolve, the content amount of the water-soluble organic solvent in the entire amount of the water-based ink may be, for example, not less than 20% by mass, or in a range of 20% by mass to 40% by mass.

The water-soluble organic solvent included in the water-based ink may be only at least one selected from the groups consisting of: propylene glycol, 1,3-butanediol, TPG and DEG. Namely, it is allowable that the water-soluble organic solvent does not include any water-soluble organic solvent which is different from the propylene glycol, 1,3-butanediol, TPG and DEG. Alternatively, the water-soluble organic solvent may further contain a humectant which is different from the propylene glycol, 1,3-butanediol, TPG and DEG. The humectant different from the propylene glycol, 1,3-butanediol, TPG and DEG is not particularly limited, and may be exemplified, for example, by: by lower alcohols such as methyl alcohol, ethyl alcohol, n-propyl alcohol, isopropyl alcohol, n-butyl alcohol, sec-butyl alcohol, tert-butyl alcohol, etc.; amides such as dimethylformamide, dimethylacetamide, etc.; ketones such as acetone, etc.; ketoalcohols (ketone alcohols) such as diacetone alcohol, etc.; ethers such as tetrahydrofuran, dioxane, etc.; polyethers such as polyalkylene glycol, etc.; polyvalent alcohols such as alkylene glycol which is different from the propylene glycol, 1,3-butanediol, TPG and DEG, glycerol, trimethylolpropane, trimethylolethane, etc.; 2-pyrrolidone; N-methyl-2-pyrrolidone; 1,3-dimethyl-2-imidazolidinone; and the like. The polyalkylene glycol is exemplified, for example, by polyethylene glycol, polypropylene glycol, etc. The alkylene glycol which is different from the propylene glycol, 1,3-butanediol, TPG and DEG is exemplified, for example, by ethylene glycol, triethylene glycol, dipropylene glycol, thiodiglycol, hexylene glycol, etc. It is allowable that one kind of the humectant as described above is used singly, or two or more kinds of the humectant are used in combination.

It is allowable that the water-soluble organic solvent further contains a penetrant. For example, the penetrant adjusts the drying velocity of the water-based ink on the recording medium.

The penetrant is exemplified, for example, by glycol ether. The glycol ether is exemplified, for example, by ethylene glycol methyl ether, ethylene glycol ethyl ether, ethylene glycol-n-propyl ether, diethylene glycol methyl ether, diethylene glycol ethyl ether, diethylene glycol-n-propyl ether, diethylene glycol-n-butyl ether, diethylene glycol-n-hexyl ether, triethylene glycol methyl ether, triethylene glycol ethyl ether, triethylene glycol-n-propyl ether, triethylene glycol-n-butyl ether, propylene glycol methyl ether, propylene glycol ethyl ether, propylene glycol-n-propyl ether, propylene glycol-n-butyl ether, dipropylene glycol methyl ether, dipropylene glycol ethyl ether, dipropylene glycol-n-propyl ether, dipropylene glycol-n-butyl ether, tripropylene glycol methyl ether, tripropylene glycol ethyl ether, tripropylene glycol-n-propyl ether, tripropylene glycol-n-butyl ether, etc. Further, it is allowable to also use, as the penetrant, the lower alcohols such as ethyl alcohol, n-propyl alcohol, isopropyl alcohol, etc., a small amount of acetone, etc., which are exemplified as the humectant. These substances may function as both the humectant and the penetrant described above. One kind of the penetrant may be used singly, or two or more kinds of the penetrant may be used in combination.

The content amount of the penetrant in the entire amount of the water-based ink is, for example, in a range of 0% by mass to 20% by mass, in a range of 0% by mass to 15% by mass, or in a range of 1% by mass to 6% by mass.

The water is preferably ion-exchanged water or pure water (purified water). The content amount of the water in the entire amount of the water-based ink is, for example, in a range of 10% by mass to 90% by mass, or in a range of 20% by mass to 80% by mass. The content amount of the water may be, for example, a balance of the other components.

The water-based ink may further contain resin minute particles (resin fine particles). The glass-transition temperature (Tg) of the resin minute particles is, for example, in a range of -60°C to 150°C, in a range of 20°C to 100°C, or is not more than 75°C. The resin minute particles may be, for example, resin minute particles contained in a resin emulsion. The term "resin emulsion" means a resin emulsion composed of, for example, the resin minute particle and a disperse medium (for example, water, etc.); in the resin emulsion, the resin minute particles are dispersed with a specific particle diameter (particle size) in the disperse medium, rather than in a dissolved state in the disperse medium. In the present specification, the resin minute particles included in the resin emulsion are defined as "emulsion particles". A resin composing the resin minute particles may be exemplified, for example, by acrylic acid-based resin, maleate ester-based resin, vinyl acetate-based resin, carbonate-based resin, styrene-based resin, ethylene-based resin, propylene-based resin, urethane-based resin, and copolymer resin thereof. Only one kind of the resin minute particles as described above may be used singly, or two or more kinds of the resin minute particles as described above may be used in combination. Among the resin minute particles as indicated above, resin minute particles composed of the acrylic acid-based resin are preferred.

As the resin emulsion, it is allowable to use, for example, a commercially available product. The commercially available product is exemplified, for example, by "MOWINYL (trade name) 6969D" (acrylic resin emulsion) (Tg: 71°C), "MOWINYL (trade name) 5450" (Tg: 53°C) and "MOWINYL (trade name) DM772" (Tg: 22°C) produced by JAPAN COATING RESIN CO., LTD.; "POLYSOL (trade name) AP-3770 (styrene-acrylic resin emulsion) produced by SHOWA DENKO K.K.; "SUPERFLEX (trade name) 150" (urethane resin emulsion) (Tg: 40°C) produced by DKS CO., LTD. (DAI-ICHI KOGYO SEIYAKU CO., LTD.); etc.

The mean (average) particle diameter (size) of the resin minute particles is, for example, in a range of 5 nm to 500 nm, in a range of 20 nm to 300 nm or in a range of 30 nm to 200 nm. The mean particle diameter can be measured, for example, by using a dynamic light scattering particle diameter distribution measuring apparatus "LB-550" (product name) produced by HORIBA, LTD., as the arithmetic mean diameter. The mean particle diameter may be a mean particle diameter (intensity mean particle diameter) calculated based on an intensity-based particle size distribution (light scattering intensity-based particle size distribution).

The content amount of the resin minute particles in the entire amount of the water-based ink is, for example, in a range of 0.1% by mass to 30% by mass, in a range of 0.5% by mass to 20% by mass, or in a range of 1% by mass to 10% by mass. One kind of the resin minute particles described above may be used singly, or two or more kinds of the resin minute particles as described above may be used in combination.

The water-based ink may be a chromatic ink containing a colorant, or may be achromatic (colorless) ink not containing any colorant. In the chromatic ink, the colorant may be either one of a pigment and a dye. Further, as the colorant, the pigment and the dye may be mixed and used as the colorant.

The pigment is not particularly limited, and may be exemplified, for example, by carbon black, an inorganic pigment, an organic pigment, etc. The carbon black is exemplified, for example, by furnace black, lamp black, acetylene black, channel black, etc. The inorganic pigment is exemplified, for example, by titanium oxide, iron oxide-based inorganic pigments, carbon black-based inorganic pigments, etc. The organic pigment is exemplified, for example, by azo-pigments such as azo lake, insoluble azo-pigment, condensed azo-pigment, chelate azo-pigment, etc.; polycyclic pigments such as phthalocyanine pigment, perylene and perynon pigments, anthraquinone pigment, quinacridone pigment, dioxadine pigment, thioindigo pigment, isoindolinone pigment, quinophthalone pigment, etc.; dye lake pigments such as basic dye type lake pigment, acid dye type lake pigment, etc.; nitro pigments; nitroso pigments; aniline black daylight fluorescent pigment; etc. Further, it is also allowable to use, as the pigment, any pigment different from those listed above and dispersible in water phase. Specific examples of these pigments include, for example, C. I. Pigment Blacks 1, 6, and 7; C. I. Pigment Yellows 1, 2, 3, 12, 13, 14, 15, 16, 17, 55, 74, 78, 150, 151, 154, 180, 185, and 194; C. I. Pigment Oranges 31 and 43; C. I. Pigment Reds 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 209, 221, 222, 224, and 238; C. I. Pigment Violets 19 and 196; C. I. Pigment Blues 1, 2, 3, 15, 15:1, 15:2, 15:3, 15:4, 16, 22, and 60; C. I. Pigment Greens 7 and 36; and solid solutions of the above-listed pigments. The water-based ink related to the present invention may be prepared by dispersing the pigment in water with a dispersant. As the dispersant, it is allowable to use, for example, a general polymeric dispersant (resin for dispersing pigment or resin-dispersing pigment, resin dispersant), etc., and may be prepared in-house. Alternatively, in the water-based ink related to the present invention, the pigment may be subjected to polymer capsulation.

The pigment may be a self-dispersible pigment. The self-dispersible pigment is dispersible in water without using any dispersant, for example, owing to the fact that at least one of a hydrophilic functional group and the salt thereof including, for example, carbonyl group, hydroxyl group, carboxylic acid group, sulfonic acid group (sulfonate group), phosphoric acid group (phosphate group), etc., is introduced into the surfaces of the particles of the pigment by the chemical bond directly or with any group intervening therebetween. It is possible to use self-dispersible pigments subjected to the surface treatment by any one of methods described, for example, in Japanese Patent Application Laid-open No. HEI8-3498 (corresponding to United States Patent No. 5,609,671), Published Japanese Translation of PCT International Publication for Patent Application No. 2000-513396 (corresponding to United States Patent No. 5,837,045), Published Japanese Translation of PCT International Publication for Patent Application No. 2008-524400 (corresponding to United States Patent Application Publication No. US 2006/0201380 A1), Published Japanese Translation of PCT International Publication for Patent Application No. 2009-515007 (corresponding to United States Patent Application Publications No. US 2007/0100023 A1 and No. US 2007/0100024 A1), Published Japanese Translation of PCT International Publication for Patent Application No. 2011-515535(corresponding to United States Patent Application Publications No. US 2009/0229489 A1), etc. It is possible to use, as a material for the self-dispersible pigment, either one of the inorganic pigment and the organic pigment. Further, a pigment which is suitable for the above-described treatment includes, for example, carbon black such as "MA8" and "MA100" produced by MITSUBISHI CHEMICAL CORPORATION, etc. As the self-dispersible pigment, it is possible, for example, to use a commercially available product. The commercially available product includes, for example, "CAB-O-JET (trade name) 200", "CAB-O-JET (trade name) 250C", "CAB-O-JET (trade name) 260M", "CAB-O-JET (trade name) 270Y", "CAB-O-JET (trade name) 300", "CAB-O-JET (trade name) 400", "CAB-O-JET (trade name) 450C", "CAB-O-JET (trade name) 465M" and "CAB-O-JET (trade name) 470Y" produced by CABOT SPECIALTY CHEMICALS; "BONJET (trade name) BLACK CW-2" and "BONJET (trade name) BLACK CW-3" produced by ORIENT CHEMICAL INDUSTRIES, LTD.; "LIOJET (trade name) WD BLACK 002C" produced by TOYO INK MFG. CO., LTD.; etc.

The solid content amount of the pigment (pigment solid content amount) in the entire amount of the water-based ink is not particularly limited, and may be appropriately determined based on, for example, a desired optical density, chromaticness, etc. The pigment solid content amount is, for example, in a range of 0.1% by mass to 20% by mass, in a range of 1% by mass to 15% by mass, or in a range of 2% by mass to 10% by mass.

The dye is not specifically limited, and is exemplified, for example, by a direct dye, an acidic dye, a basic dye, a reactive dye, a food dye, etc. Specific examples of the dye include, for example, C. I. Direct Black, C. I. Direct Blue, C. I. Direct Red, C. I. Direct Yellow, C. I. Direct Orange, C. I. Direct Violet, C. I. Direct Brown, C. I. Direct Green; C. I. Acid Black, C. I. Acid Blue, C. I. Acid Red, C. I. Acid Yellow, C. I. Acid Orange, C. I. Acid Violet; C. I. Basic Black, C. I. Basic Blue, C. I. Basic Red, C. I. Basic Violet; C. I. Reactive Blue, C. I. Reactive Red, C. I. Reactive Yellow; C. I. Food Black, C. I. Food Red, C. I. Food Yellow; etc. C. I. Direct Black described above is exemplified, for example, by C. I. Direct Blacks 17, 19, 22, 31, 32, 51, 62, 71, 74, 108, 112, 113, 146, 154, 168, 195, etc. C. I. Direct Blue described above is exemplified, for example, by C. I. Direct Blues 1, 6, 15, 22, 25, 41, 71, 76, 77, 80, 86, 90, 98, 106, 108, 120, 158, 163, 168, 199, 226, etc. C. I. Direct Red described above is exemplified, for example, by C. I. Direct Reds 1, 2, 4, 9, 11, 17, 20, 23, 24, 28, 31, 39, 46, 62, 75, 79, 80, 83, 89, 95, 197, 201, 218, 220, 224, 225, 226, 227, 228, 229, 230, etc. C. I. Direct Yellow described above is exemplified, for example, by C. I. Direct Yellows 8, 11, 12, 24, 26, 27, 28, 33, 39, 44, 50, 58, 85, 86, 87, 88, 89, 98, 100, 110, 132, 142, 173, etc. C. I. Direct Orange described above is exemplified, for example, by C. I. Direct Oranges 34, 39, 44, 46, 60, etc. C. I. Direct Violet described above is exemplified, for example, by C. I. Direct Violets 47, 48, etc. C. I. Direct Brown described above is exemplified, for example, by C. I. Direct Brown 109, etc. C. I. Direct Green described above is exemplified, for example, by C. I. Direct Green 59, etc. C. I. Acid Black described above is exemplified, for example, by C. I. Acid Blacks 2, 7, 24, 26, 31, 48, 51, 52, 63, 110, 112, 115, 118, 156, etc. C. I. Acid Blue described above is exemplified, for example, by C. I. Acid Blues 1, 7, 9, 15, 22, 23, 25, 29, 40, 43, 59, 62, 74, 78, 80, 90, 93, 100, 102, 104, 117, 120, 127, 138, 158, 161, 167, 220, 234, etc. C. I. Acid Red described above is exemplified, for example, by C. I. Acid Reds 1, 6, 8, 9, 13, 14, 18, 26, 27, 32, 35, 37, 42, 51, 52, 80, 83, 85, 87, 89, 92, 94, 106, 114, 115, 133, 134, 145, 158, 180, 198, 249, 256, 265, 289, 315, 317, etc. C. I. Acid Yellow described above is exemplified, for example, by C. I. Acid Yellows 1, 3, 7, 11, 17, 23, 25, 29, 36, 38, 40, 42, 44, 61, 71, 76, 98, 99, etc. C. I. Acid Orange described above is exemplified, for example, by C. I. Acid Oranges 7, 19, etc. C. I. Acid Violet described above is exemplified, for example, by C. I. Acid Violet 49, etc. The C. I. Basic Black is exemplified, for example, by C. I. Basic Black 2, etc. The C. I. Basic Blue is exemplified, for example, by C. I. Basic Blues 1, 3, 5, 7, 9, 24, 25, 26, 28, 29, etc. The C. I. Basic Red is exemplified, for example, by C. I. Basic Reds 1, 2, 9, 12, 13, 14, 37, etc. The C. I. Basic Violet is exemplified, for example, by C. I. Basic Violets 7, 14, 27, etc. C. I. Reactive Blue described above is exemplified, for example, by C. I. Reactive Blues 4, 5, 7, 13, 14, 15, 18, 19, 21, 26, 27, 29, 32, 38, 40, 44, 100, etc. C. I. Reactive Red described above is exemplified, for example, by C. I. Reactive Reds 7, 12, 13, 15, 17, 20, 23, 24, 31, 42, 45, 46, 59, etc. C. I. Reactive Yellow described above is exemplified, for example, by C. I. Reactive Yellows 2, 3, 17, 25, 37, 42, etc. C. I. Food Black described above is exemplified, for example, by C. I. Food Blacks 1, 2, etc. C. I. Food Red described above is exemplified, for example, by C. I. Food Reds 87, 92, 94, etc. C. I. Food Yellow described above is exemplified, for example, by C. I. Food Yellow 3, etc.

It is allowable that one kind of the dye as described above is used singly, or two or more kinds of the dye are used in combination. The content amount of the dye in the entire amount of the water-based ink is, for example, in a range of 0.1% by mass to 20% by mass, in a range of 1% by mass to 15% by mass, or in a range of 2% by mass to 10% by mass.

The water-based ink may further include a conventionally known additive, as necessary. The additive is exemplified, for example, by pH-adjusting agents, viscosity-adjusting agents, surface tension-adjusting agents, fungicides, etc. The viscosity-adjusting agents are exemplified, for example, by polyvinyl alcohol, cellulose, water-soluble resin, etc.

The water-based ink can be prepared, for example, by uniformly mixing the surfactant, the water-soluble organic solvent, the water, and an optionally other additive(s) as necessary, by a conventionally known method, and then removing any non-dissolved matter, with a filter, etc.

Next, an ink-jet recording apparatus and an ink-jet recording method related to the present invention will be explained.

The ink-jet recording apparatus related to the present invention is an ink-jet recording apparatus characterized by including: an ink storing part, and an ink discharging mechanism; and being configured to discharge an ink stored in the ink storing part by the ink discharging mechanism; wherein the water-based ink for ink-jet recording related to the present invention is stored in the ink storing part. As will be described later on, the ink-jet recording apparatus related to the present invention may further include a drying mechanism configured to dry a recording part or recording portion recorded by using the ink.

The ink-jet recording method related to the present invention is characterized by including: a recording step of performing recording by jetting (by discharging) a water-based ink onto a recording medium in accordance with an ink-jet system; wherein the water-based ink for ink-jet recording related to the present invention is used as the water-based ink in the recording step. The ink-jet recording method related to the present invention may further include a fixing step of fixing the water-based ink to the recording medium by use of a drying mechanism configured to dry a recording part of the recording medium.

The ink-jet recording method related to the present invention can be performed, for example, by using the ink-jet recording apparatus related to the present invention. The recording includes printing a letter (text), printing an image, printing, etc.

Fig. 1 schematically depicts an exemplary configuration of the ink-jet recording apparatus related to the present invention. As depicted in Fig. 1, an ink-jet recording apparatus 100 includes a feed tray 101, a conveyance mechanism (not depicted) such as a roller, recording mechanisms 102A and 102B, a platen 103, a drying mechanism 104, a discharge tray 105, and ink storing sections (not depicted) such as ink cartridges or ink tanks. The feed tray 101 can support a plurality of pieces of a recording medium P (e.g., a plurality of pieces of coated paper sheet) stacked thereon.

The recording mechanism includes a carriage 102A and an ink-jet head (ink jetting mechanism) 102B. The carriage 102A is supported by two guide rails (not depicted) extending orthogonally with respect to a conveyance direction of the recording medium P. The two guide rails are supported by a casing (not depicted) of the ink-jet recording apparatus 100. The carriage 102A is connected to a well-known belt mechanism (not depicted) provided in the two guide rails. The belt mechanism is driven by a carriage motor (not depicted). The carriage motor is driven to thereby cause the carriage 102A connected to the belt mechanism to reciprocate (move reciprocatingly) in an orthogonal direction which is orthogonal with respect to the conveyance direction of the recording medium P.

Further, four ink tubes (not depicted) connecting the ink storing sections and the ink-jet head 102B, and a flexible flat cable (not depicted) electrically connecting a control board (not depicted) and the ink-jet head 102B extend from the carriage 102A. Four colors of water-based inks (yellow, magenta, cyan, and black) stored in the ink storing sections are supplied to the ink-jet head 102B via the four ink tubes. At least one of the four water-based inks is the water-based ink for ink-jet recording related to the present invention. A control signal outputted from the control board is transmitted to the ink-jet head 102B via the flexible flat cable.

As depicted in Fig. 1, the carriage 102A has the ink-jet head 102B mounted or installed therein. Nozzles 102C are formed in a lower surface of the ink-jet head 102B. A front end of each of the nozzles 102C is exposed from the carriage 102A and the lower surface of the ink-jet head 102B. The ink-jet head 102B includes an actuator (not depicted) which applies force for jetting the water-based ink which is supplied from the ink storing section to the ink-jet head 102B via the ink tube. The actuator may be an actuator of any system, such as a piezoelectric element system, a thermal ink-jet system, an electrostatic attraction system, etc. The ink-jet head 102B jets or discharges the water-based ink, as fine or minute ink droplets of the water-based ink, from the nozzles 102C during a process in which the carriage 102A reciprocates in the orthogonal direction with respect to the conveyance direction of the recording medium P. With this, an image is recorded on the recording medium P. The platen 103 is arranged so as to face the recording mechanism, and supports the recording medium P conveyed from the feed tray 101.

The drying mechanism 104 heats and dries a recording part of the recording medium P. The drying temperature during the drying can be adjusted as appropriate by changing the setting of the drying mechanism 104. Specifically, the drying temperature may be, for example, in a range of 20°C to 200°C or in a range of 50°C to 100°C. The drying time may be also adjusted as appropriate by changing the setting of the drying mechanism 104. For example, the drying time may be in a range of a second(s) exceeding 0 seconds to not more than 300 seconds, in a range of 0.1 seconds to 60 seconds, or in a range of 1 second to 60 seconds. Any drying mechanism which is capable of drying the recording part may be used as the drying mechanism 104. Examples of the drying mechanism 104 include heating mechanisms such as commercially available dryers, IR heaters, ovens, belt conveyer ovens, irons, hot presses, etc. A non-contact drying mechanism, such as the drier, the IR heater, the oven, the belt conveyer oven, etc., which dries the recording part of the recording medium P without contacting with the recording part is preferably used.

The recording medium P after recording and drying is conveyed to the discharge tray 105.

### [EXAMPLES]

Next, Examples of the present invention are explained together with Comparative Examples. Note that the present invention is not limited to and restricted by Examples and Comparative Examples described below.

### <Preparation of Resin Dispersant>

135g of Terathane (trade name) 650 (polyether diol produced by INVISTA (Wichita, KS)), 54g of 2,2'-dimethylolpropionic acid (DMPA), 132g of sulfolane and 0.06g of dibutyltin dilaurate (DBTDL) were added to a flask provided with a dropping funnel, a condenser and an agitator (stirring device) under an atmosphere of nitrogen, then were heated up to 60°C while being mixed, and then were mixed sufficiently; thus, a mixture was obtained. To the obtained mixture, 164g of m-tetramethylene xylylenediisocyanate (TMXDI) was added with the dropping funnel, and remaining TMXDI in the dropping funnel was rinsed with 15g of sulfolane into the flask. The temperature was raised up to 100°C, and was maintained at 100°C until the content rate of isocyanate reached to be not more than 1.3% by mass. Next, the temperature was lowered up to 60°C, then 12.9g of diethanolamine (DEA) was added to the mixture over 5 (five) minutes with the dropping funnel, and the temperature was maintained at 60°C until remaining DEA in the dropping funnel was rinsed with 5g of sulfolane into the flask. Furthermore, the temperature was maintained at 60°C for one hour, then 376g of a 3% by mass aqueous solution of potassium hydroxide was added to the mixture over 10 (ten) minutes with the dropping funnel, then 570g of deionized water was further added to the mixture. Then, the temperature was maintained at 60°C for one hour, and cooling to the room temperature was performed. Thus, a resin dispersant with 24% by mass of solid content was obtained.

### <Preparation of Pigment Dispersion Liquid A>

The resin dispersant was neutralized with either one of potassium hydroxide and amine in order to increase the solubility in water and to make the resin dispersant to easily dissolve to water. Then, a microfluidizer of high-pressure compressed air system (Model name: M-110Y, produced by MICROFLUIDICS (Newton, Massachusetts)) was used so as to produce a mixture in which content amount of carbon black was approximately 27% by mass and the mass ratio (P/D) of the content amount (P) of the carbon black to the content amount (D) of the resin dispersant was P/D = 3. Then, deionized water was added to the mixture so that the content amount of the carbon black was made to be approximately 24% by mass for the suitable medium mill grinding condition; and the mixture was milled (pulverized) for 4 (four) hours. After the milling, the deionized water was added, and the mixture was mixed sufficiently. Then, after any impurity was filtered and removed, dilution with deionized water was performed so that the content amount of the carbon black was made to be 15% by mass; thus, a pigment dispersion liquid A was obtained.

### <Preparation of Pigment Dispersion Liquid B>

A pigment dispersion Liquid B was obtained similarly to the above-described preparation of the pigment dispersion liquid A, except that an Eiger Minimill (Model name: M250, produced by VSE EXP, EIGER MACHINERY INC. (Chicago, Illinois)) was used, instead of using the microfluidizer of high-pressure compressed air system, and that a phthalocyanine pigment was used instead of using the carbon black.

### <Examples 1 to 6 and 8 to 11, and Comparative Examples 1 to 6>

Ingredients or components, except for the resin minute particles (resin emulsion) and the pigment dispersion liquids A and B, which were included in Water-based ink composition (TABLE 1 or TABLE 2) were mixed uniformly or homogeneously; and thus an ink solvent was obtained. Subsequently, the resin emulsion was added to the ink solvent, followed by being mixed uniformly, and then the pigment dispersion liquid A or B was added to the ink solvent in which the resin emulsion had been mixed, followed by being mixed uniformly, and thus a mixture was obtained. After that, the obtained mixture was filtrated through a cellulose acetate membrane filter (pore size 3.00 µm) produced by TOYO ROSHI KAISHA, LTD., and thus the water-based ink for ink-jet recording of each of Examples 1 to 6 and 8 to 11 as indicated in TABLE 1, and Comparative examples 1 to 6 as indicated in TABLE 2 was obtained.

### <Example 7>

Ingredients or components, except for the resin minute particles (resin emulsion) and C.I. Acid Red (azo dye), which were included in Water-based ink composition (TABLE 1) were mixed uniformly or homogeneously; and thus an ink solvent was obtained. Subsequently, the resin emulsion was added to the ink solvent, followed by being mixed uniformly, and then the C.I. Acid Red 52 was added to the ink solvent in which the resin emulsion had been mixed, followed by being mixed uniformly, and thus a mixture was obtained. After that, the obtained mixture was filtrated through a cellulose acetate membrane filter (pore size 3.00 µm) produced by TOYO ROSHI KAISHA, LTD., and thus the water-based ink for ink-jet recording of Example 7 as indicated in TABLE 1 was obtained. The water-based ink of Example 7 is an ink which used a dye as the colorant.

### <Example 12>

Ingredients or components, except for the resin minute particles (resin emulsion), which were included in Water-based ink composition (TABLE 1) were mixed uniformly or homogeneously; and thus an ink solvent was obtained. Subsequently, the resin emulsion was added to the ink solvent, followed by being mixed uniformly, and thus a mixture was obtained. After that, the obtained mixture was filtrated through a cellulose acetate membrane filter (pore size 3.00 µm) produced by TOYO ROSHI KAISHA, LTD., and thus the water-based ink for ink-jet recording of Example 12 as indicated in TABLE 1 was obtained. The water-based ink of Example 12 is a colorless or achromatic ink (clear ink) not including any colorant.

With respect to the water-based inks of Examples 1 to 12 and Comparative examples 1 to 6, (a) evaluation of surfactant dissolution, (b) evaluation of spreading of ink droplet, (c) evaluation of fixing property to paper sheet, and (d) evaluation of fixing property to film were conducted by the following methods.

### (a) Evaluation of surfactant dissolution

The filtration filter after the preparation of the water-based ink of each of Examples 1 to 12 and Comparative Examples 1 to 6 was visually observed, and evaluation was made based on the following evaluation criterion.

### <Evaluation of surfactant dissolution: evaluation criterion>

G: Any residual of undissolved matter and/or aggregate were/was not present.
NG: A residual of undissolved matter and/or aggregate were/was present.

### (b) Evaluation of spreading of ink droplet

An ink-jet printer MFC-J4225N, produced by BROTHER KOGYO KABUSHIKI KAISHA, was used so as to record an image with the water-based ink of each of Examples 1 to 12 and Comparative Examples 1 to 6 on coated paper (product name: OK Top Coat Plus, produced by OJI PAPER CO., LTD.), at 600 dpi, while changing an ink amount per 1 (one) dot (8 pL to 10pL/dot or 12 pL to 14 pL/dot). The image was visually observed, and the evaluation was made based on the following evaluation criterion.

### <Evaluation of spreading of ink droplet: evaluation criterion>

AA: There was not any gap between the dots in an image recorded by 8 pL to 10 pL/dot.
A: Although there was a gap between the dots in an image recorded by 8 pL to 10 pL/dot, there was not any gap between the dots in an image recorded by 12 pL to 14 pL/dot.
B: There was a gap between the dots in an image recorded by 12 pL to 14 pL/dot.

### (c) Evaluation of fixing property to paper sheet

The above-described ink-jet printer MFC-J4225N was used to record an image on coated paper (product name: OK Top Coat Plus, produced by OJI PAPER CO., LTD.) with each of the water-based inks of Examples 1 to 12 and Comparative Examples 1 to 6, at 600 dpi and in an ink amount in a range of 8 pL to 10 pL/dot, and thus a recorded matter was obtained. Afterwards, the recorded matter was dried for 1 (one) minute under an atmosphere of 100°C, and then was cooled down to the room temperature (approximately 20°C). After the cooling, a cotton swab to which a pressure of 0.2 MPa or 0.1 MPa was being applied was moved on a surface of the image at a velocity of approximately 50mm/second; the fixing property of the water-based ink to the paper was visually observed, and the evaluation was made based on the following evaluation criterion.

### <Evaluation of fixing property to paper sheet: evaluation criterion>

AA: Even under the pressure of 0.2 MPa, the water-based ink was not adhered to the cotton swab, and was fixed to the paper sheet.
A: Under the pressure of 0.2 MPa, a small amount of the water-based ink was adhered to the cotton swab. However, under the pressure of 0.1 MPa, the water-based ink was not adhered to the cotton swab, and was fixed to the paper sheet.
B: Under the pressure of 0.1 MPa, a small amount of the water-based ink was adhered to the cotton swab.

### (d) Evaluation of fixing property to film

The fixing property to film was visually observed in a similar manner as in (c) Evaluation of fixing property to paper sheet as described above, except that a commercially available PET (polyethylene terephthalate) film was used instead of using the coat paper (OK Top Coat Plus, produced by OJI PAPER CO., LTD.); and the evaluation was made based on the following evaluation criterion.

### <Evaluation of fixing property to film: evaluation criterion>

AA: Even under the pressure of 0.2 MPa, the water-based ink was not adhered to the cotton swab, and was fixed to the film.
A: Under the pressure of 0.2 MPa, a small amount of the water-based ink was adhered to the cotton swab. However, under the pressure of 0.1 MPa, the water-based ink was not adhered to the cotton swab, and was fixed to the film.
B: Under the pressure of 0.1 MPa, a small amount of the water-based ink was adhered to the cotton swab.

The water-based ink compositions and the evaluation results of the above-described evaluations (a) to (d) in Examples 1 to 12 and Comparative Examples 1 to 6 are indicated in TABLE 1 and TABLE 2 as follows.

TABLE 1 (following) - LEGEND
*1: Surfactant having solubility in water at 20°C in a range of 0.05% by mass to 0.2% by mass; produced by NISSHIN CHEMICAL CO.; the numeral in TABLE 1 indicates the active ingredient amount;
*2: Surfactant having solubility in water at 20°C in a range of 0.05% by mass to 0.2% by mass; produced by NISSHIN CHEMICAL CO.; the numeral in TABLE 1 indicates the active ingredient amount;
*3: Surfactant having solubility in water at 20°C in a range of 0.05% by mass to 0.2% by mass; produced by KAO CORPORATION; the numeral in TABLE 1 indicates the active ingredient amount;
*4: Surfactant having solubility in water at 20°C in a range of 0.05% by mass to 0.2% by mass; produced by KAO CORPORATION; the numeral in TABLE 1 indicates the active ingredient amount;
*5: Surfactant having solubility in water at 20°C in a range of 0.05% by mass to 0.2% by mass; produced by NOF CORPORATION; the numeral in TABLE 1 indicates the active ingredient amount;
*6: Surfactant having solubility in water at 20°C in a range of 0.05% by mass to 0.2% by mass; produced by KAWAKEN FINE CHEMICALS CO., LTD.; the numeral in TABLE 1 indicates the active ingredient amount;
*7: Resin emulsion produced by JAPAN COATING RESIN CORPORATION; the numeral in TABLE 1 indicates the active ingredient amount (solid content amount);
*8: Resin emulsion produced by SHOWA DENKO K.K.; the numeral in TABLE 1 indicates the active ingredient amount (solid content amount);
*9: Carbon black dispersion liquid; the numeral in upper column indicates the pigment solid content amount, and the numeral in lower column indicates the blending amount of the resin dispersant; and
* 10: Phthalocyanine pigment dispersion liquid; the numeral in upper column indicates the pigment solid content amount, and the numeral in lower column indicates the blending amount of the resin dispersant.

Examples 1, 2, 6, 7, 9, 10 and 12 are reference examples not according to the present invention.

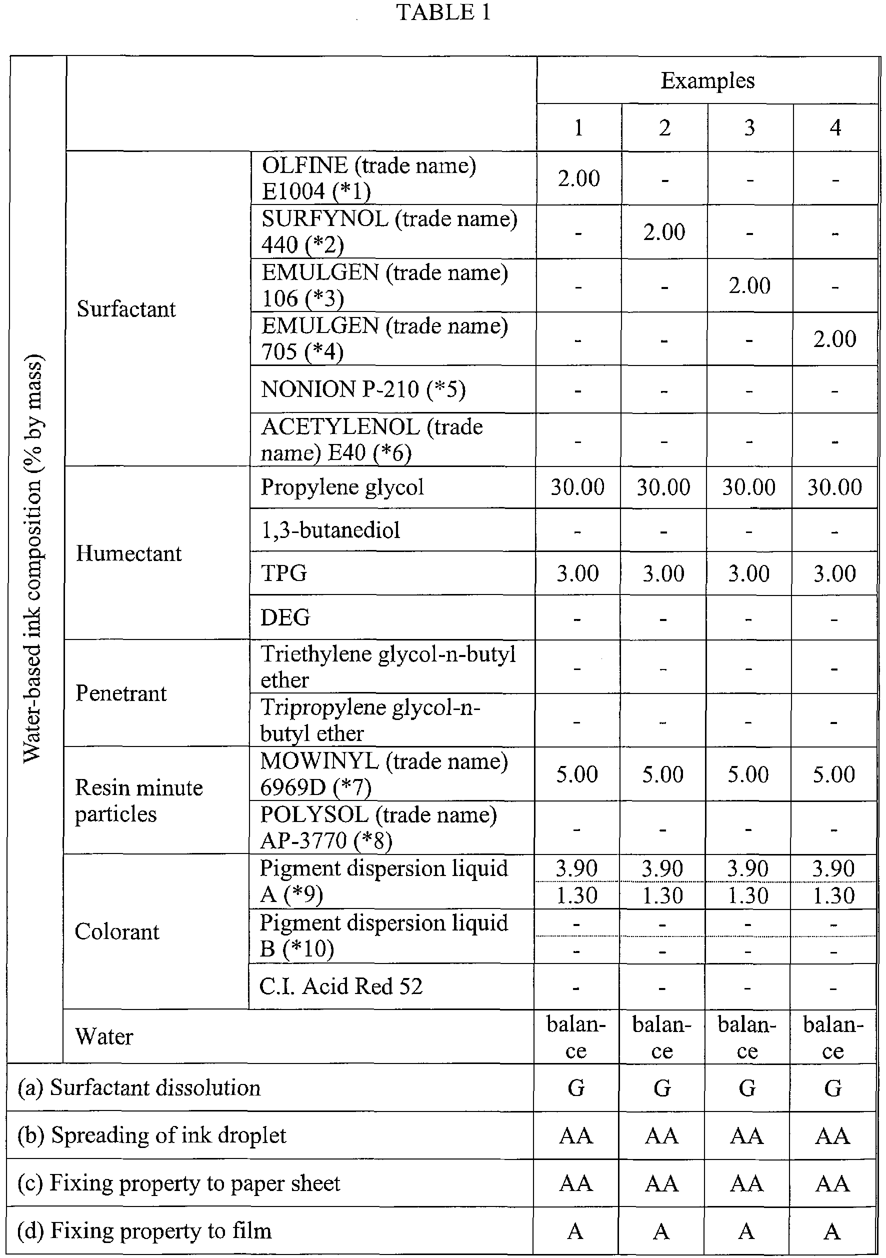

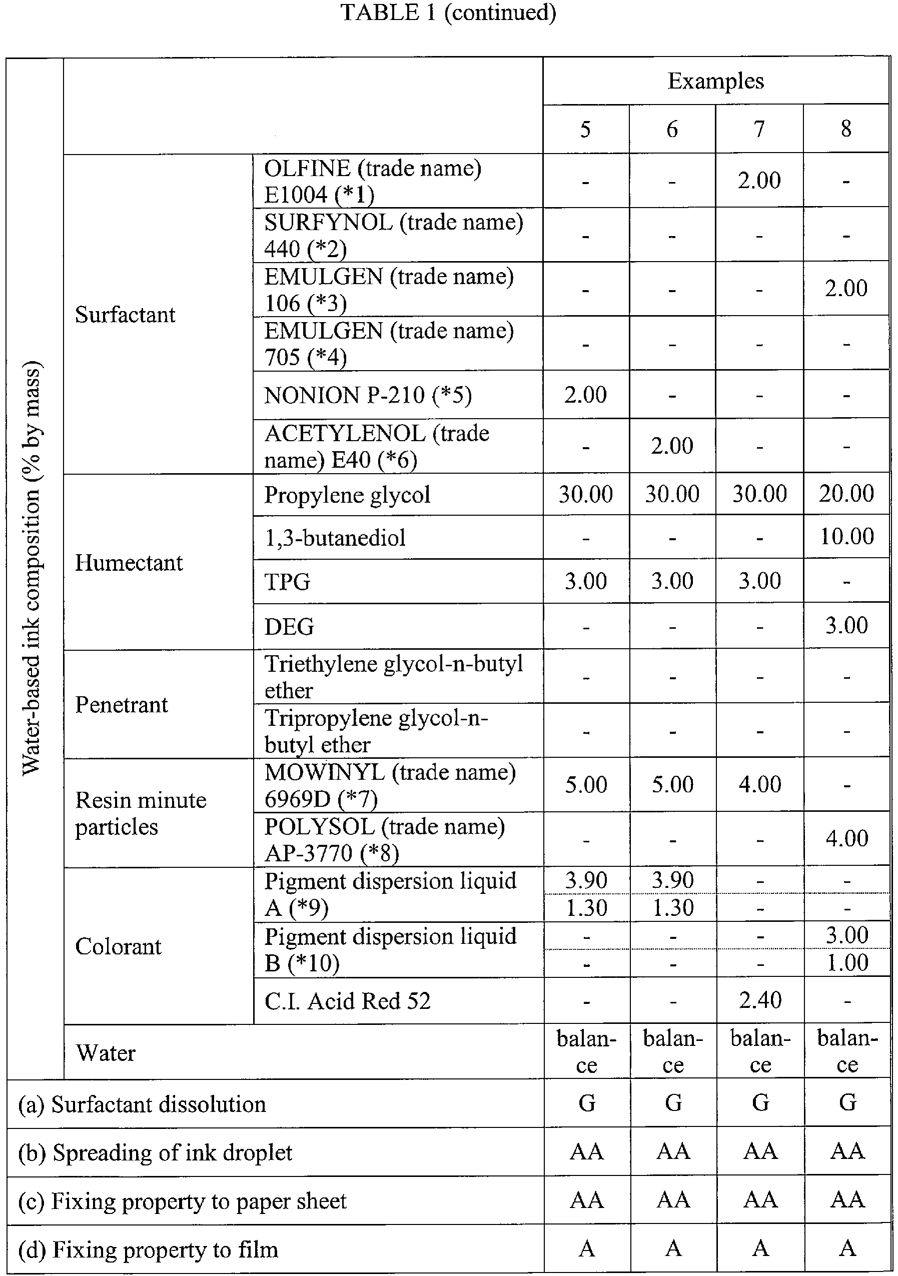

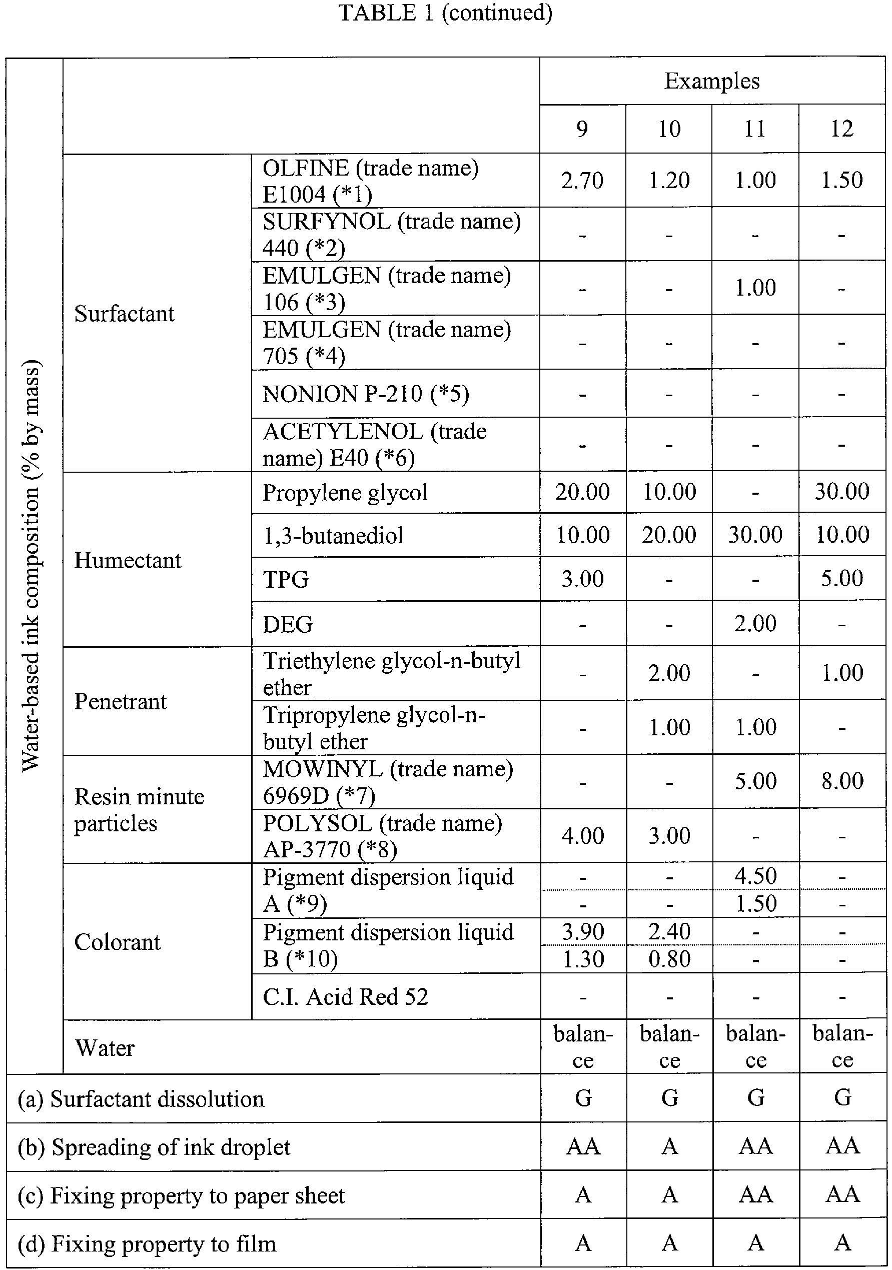

TABLE 2 (following) - LEGEND
*1: Surfactant having solubility in water at 20°C in a range of 0.05% by mass to 0.2% by mass; produced by NISSHIN CHEMICAL CO.; the numeral in TABLE 2 indicates the active ingredient amount;
*3: Surfactant having solubility in water at 20°C in a range of 0.05% by mass to 0.2% by mass; produced by KAO CORPORATION; the numeral in TABLE 2 indicates the active ingredient amount;
*11: Surfactant having solubility in water at 20°C exceeding 0.2% by mass; produced by NISSHIN CHEMICAL CO.; the numeral in TABLE 2 indicates the active ingredient amount;
*12: Surfactant having solubility in water at 20°C exceeding 0.2% by mass; produced by KAO CORPORATION; the numeral in TABLE 2 indicates the active ingredient amount;
*13: Surfactant having solubility in water at 20°C less than 0.05% by mass; produced by KAO CORPORATION; the numeral in TABLE 2 indicates the active ingredient amount;
*7: Resin emulsion produced by JAPAN COATING RESIN CORPORATION; the numeral in TABLE 2 indicates the active ingredient amount (solid content amount);
*8: Resin emulsion produced by SHOWA DENKO K.K.; the numeral in TABLE 2 indicates the active ingredient amount (solid content amount);
*9: Carbon black dispersion liquid; the numeral in upper column indicates the pigment solid content amount, and the numeral in lower column indicates the blending amount of the resin dispersant; and
*10: Phthalocyanine pigment dispersion liquid; the numeral in upper column indicates the pigment solid content amount, and the numeral in lower column indicates the blending amount of the resin dispersant.

Note that in TABLE 2, "N/A" indicates "Not Available".

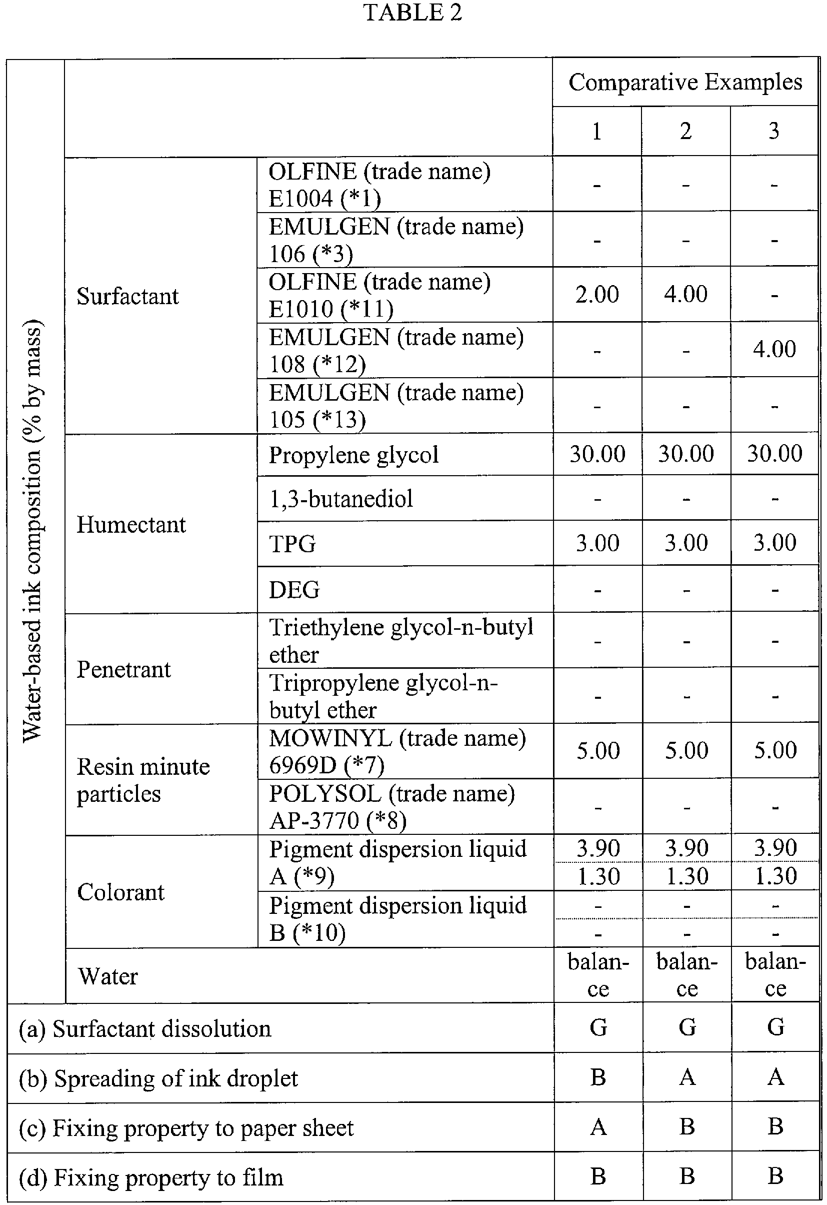

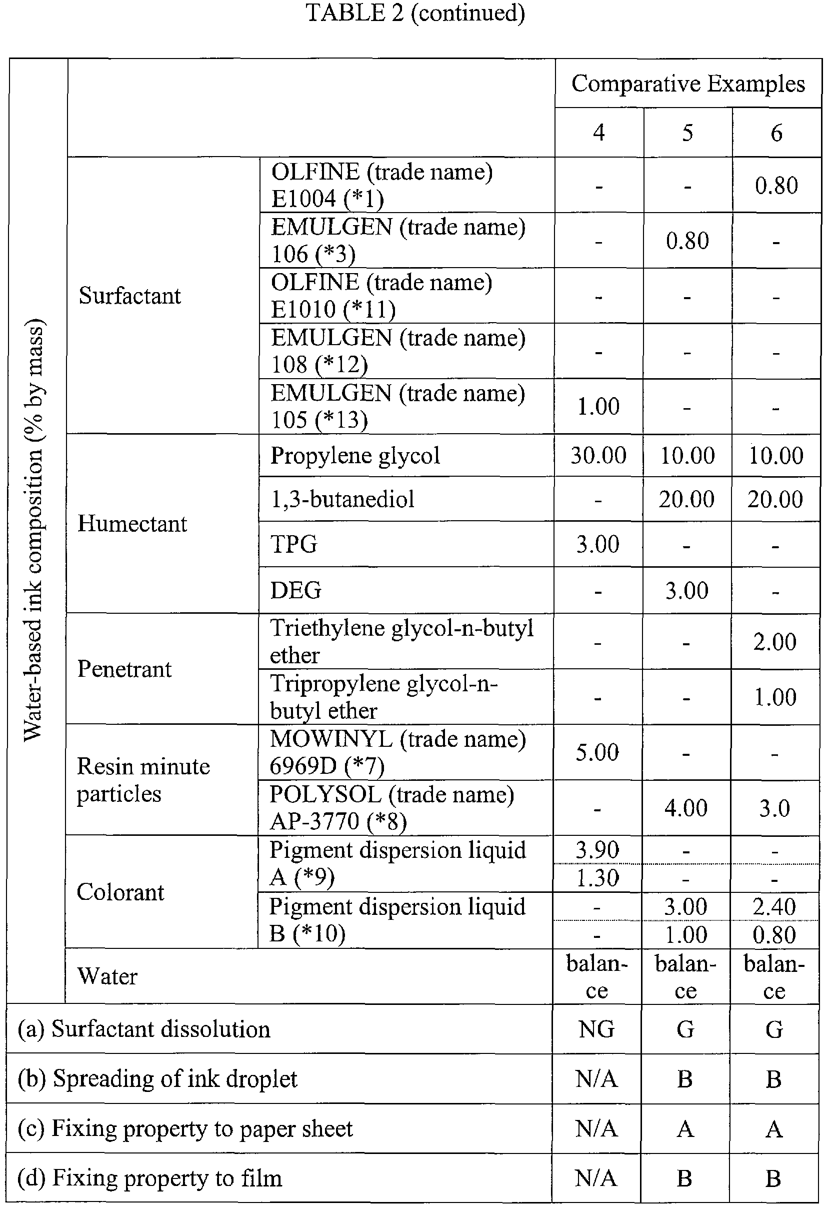

As indicated in TABLE 1, in Examples 1 to 12, the evaluation results were satisfactory in relation to all of (a) evaluation of surfactant dissolution, (b) evaluation of spreading of ink droplet, (c) evaluation of fixing property to paper sheet, and (d) evaluation of fixing property to film. In particular, in Examples 1 to 8, 11 and 12 in each of which the content amount of the hydrophobic surfactant in the entire amount of the water-based ink was in the range of 1.3% by mass to 2.5% by mass, the evaluation results were particularly satisfactory in relation to (b) evaluation of spreading of ink droplet and (c) evaluation of fixing property to paper sheet.

On the other hand, as indicated in TABLE 2, Comparative Examples 1 to 3 each using the surfactant having the solubility in water at 20°C exceeding 0.2% by mass, instead of using the surfactant having the solubility in water at 20°C in the range of 0.05% by mass to 0.2% by mass, had unsatisfactory results in any one of (b) evaluation of spreading of ink droplet, (c) evaluation of fixing property to paper sheet, and (d) evaluation of fixing property to film. Further, as indicated in TABLE 2, Comparative Example 4 using the surfactant having the solubility in water at 20°C less than 0.05% by mass, instead of using the surfactant having the solubility in water at 20°C in the range of 0.05% by mass to 0.2% by mass, had unsatisfactory results in (a) evaluation of surfactant dissolution, was not capable of performing the recording, and thus it was not possible to perform (b) evaluation of spreading of ink droplet, (c) evaluation of fixing property to paper sheet, and (d) evaluation of fixing property to film. Furthermore, as indicated in TABLE 2, Comparative Examples 5 and 6, in each of which the content amount of the surfactant having the solubility in water at 20°C in the range of 0.05% by mass to 0.2% by mass was less than 1% by mass, had unsatisfactory results in (b) evaluation of spreading of ink droplet and (d) evaluation of fixing property to film.

### [INDUSTRIAL APPLICABILITY]

As described above, the water-based ink related to the present invention has a satisfactory wettability with respect to a hydrophobic recording medium, the ink droplet of the water-based ink spreads on a surface of the hydrophobic recording medium, and a small amount of the water-based ink is capable of filling a predetermined area of the hydrophobic recording medium. The usage of the water-based ink related to the present invention is not particularly limited to the ink-jet recording on the hydrophobic recording medium such as the coated paper, etc., and is widely applicable to the ink-jet recording on a variety of kinds of recording medium including, for example, plain paper (regular paper), glossy paper, mat paper, etc.

### [Reference sign list]

- 100: ink-jet recording apparatus
- 101: feed tray
- 102A: carriage
- 102B: ink-jet head (ink discharging mechanism)
- 102C: nozzle
- 103: platen
- 104: drying mechanism
- 105: discharge tray

## Claims

1. A water-based ink for ink-jet recording, comprising:
a water-soluble organic solvent;
water; and
a surfactant having solubility in the water at 20°C in a range of 0.05% by mass to 0.2% by mass,
wherein a content amount of the surfactant in an entire amount of the water-based ink is in a range of 1.2% by mass to 2.7% by mass, and
wherein the surfactant includes at least polyoxyethylene-based surfactant.

2. The water-based ink for ink-jet recording according to claim 1, wherein the water-soluble organic solvent includes at least one selected from the group consisting of: propylene glycol, 1,3-butanediol, tripropylene glycol and diethylene glycol.

3. The water-based ink for ink-jet recording according to claim 1 or 2, wherein a content amount of the water-soluble organic solvent in the entire amount of the water-based ink is not less than 10% by mass.

4. The water-based ink for ink-jet recording according to claim 3, wherein the content amount of the water-soluble organic solvent in the entire amount of the water-based ink is not less than 20% by mass.

5. The water-based ink for ink-jet recording according to claim 3, wherein the content amount of the water-soluble organic solvent in the entire amount of the water-based ink is in a range of 20% by mass to 40% by mass.

6. The water-based ink for ink-jet recording according to any one of claims 1 to 5, wherein the content amount of the surfactant in the entire amount of the water-based ink is in a range of 1.3% by mass to 2.5% by mass.

7. The water-based ink for ink-jet recording according to any one of claims 1 to 6, further comprising resin minute particles having a size in a range of 5 nm to 500 nm, preferable in a range of 20 nm to 300 nm or more preferable in a range of 30 nm to 200 nm.

8. The water-based ink for ink-jet recording according to claim 7, wherein the resin minute particles are emulsion particles.

9. The water-based ink for ink-jet recording according to any one of claims 1 to 8, further comprising a colorant.

10. The water-based ink for ink-jet recording according to claim 1, further comprising resin minute particles having a size in a range of 5 nm to 500 nm, preferable in a range of 20 nm to 300 nm or more preferable in a range of 30 nm to 200 nm,
wherein the surfactant further includes an acetylene glycol-based surfactant;
the water-soluble organic solvent includes propylene glycol; and
a content amount of the water-soluble organic solvent in the entire amount of the water-based ink is not less than 20% by mass.

11. The water-based ink for ink-jet recording according to claim 1, further comprising resin minute particles having a size in a range of 5 nm to 500 nm, preferable in a range of 20 nm to 300 nm or more preferable in a range of 30 nm to 200 nm,
wherein the surfactant further includes an acetylene glycol-based surfactant;
the water-soluble organic solvent includes 1,3-butanediol; and
a content amount of the water-soluble organic solvent in the entire amount of the water-based ink is not less than 20% by mass.

12. The water-based ink for ink-jet recording according to claim 1, further comprising resin minute particles having a size in a range of 5 nm to 500 nm, preferable in a range of 20 nm to 300 nm or more preferable in a range of 30 nm to 200 nm,
wherein the water-soluble organic solvent includes propylene glycol, and
wherein a content amount of the water-soluble organic solvent in the entire amount of the water-based ink is not less than 20% by mass.

13. The water-based ink for ink-jet recording according to claim 1, further comprising resin minute particles having a size in a range of 5 nm to 500 nm, preferable in a range of 20 nm to 300 nm or more preferable in a range of 30 nm to 200 nm,
wherein the water-soluble organic solvent includes 1,3-butanediol, and
wherein a content amount of the water-soluble organic solvent in the entire amount of the water-based ink is not less than 20% by mass.

14. An ink-jet recording apparatus comprising:
an ink storing part storing the water-based ink for ink-jet recording as described in any one of claims 1 to 13; and
an ink discharging mechanism configured to discharge the ink stored in the ink storing part.

15. The ink-jet recording apparatus according to claim 14, further comprising a drying mechanism configured to dry a recording part recorded by the ink.

16. An ink-jet recording method comprising discharging, onto a recording medium, the water-based ink for ink-jet recording as described in any one of claims 1 to 13.

17. The ink-jet recording method according to claim 16, further comprising drying a recording part of the recording medium by a drying mechanism.

18. The ink-jet recording method according to claim 17, wherein in the drying of the recording part of the recording medium, a drying temperature is in a range of 20°C to 200°C.

19. The ink-jet recording method according to claim 17, wherein in the drying of the recording part of the recording medium, a drying temperature is in a range of 50°C to 100°C.

## Patentansprüche

1. Wasserbasierte Tinte für eine Tintenstrahlaufzeichnung, aufweisend:
ein wasserlösliches organisches Lösungsmittel;
Wasser; und
ein Tensid mit einer Löslichkeit in dem Wasser bei 20 °C in einem Bereich von 0,05 bis 0,2 Massenprozent,
wobei eine Gehaltsmenge des Tensids in einer Gesamtmenge der wasserbasierten Tinte in einem Bereich von 1,2 Massenprozent bis 2,7 Massenprozent ist, und
wobei das Tensid zumindest ein Tensid auf Polyoxyethylenbasis beinhaltet.

2. Wasserbasierte Tinte für eine Tintenstrahlaufzeichnung nach Anspruch 1, wobei das wasserlösliche organische Lösungsmittel zumindest eines ist, welches aus der Gruppe bestehend aus Propylenglykol, 1,3-Butandiol, Tripropylenglykol und Diethylenglykol ausgewählt ist.

3. Wasserbasierte Tinte für eine Tintenstrahlaufzeichnung nach Anspruch 1 oder 2, wobei eine Gehaltmenge des wasserlöslichen organischen Lösungsmittels in der Gesamtmenge der wasserbasierten Tinte nicht weniger als 10 Massenprozent ist.

4. Wasserbasierte Tinte für eine Tintenstrahlaufzeichnung nach Anspruch 3, wobei die Gehaltmenge des wasserlöslichen organischen Lösungsmittels in der Gesamtmenge der wasserbasierten Tinte nicht weniger als 20 Massenprozent ist.

5. Wasserbasierte Tinte für eine Tintenstrahlaufzeichnung nach Anspruch 3, wobei die Gehaltmenge des wasserlöslichen organischen Lösungsmittels in der Gesamtmenge der wasserbasierten Tinte in einem Bereich von 20 Massenprozent bis 40 Massenprozent ist.

6. Wasserbasierte Tinte für eine Tintenstrahlaufzeichnung nach einem der Ansprüche 1 bis 5, wobei die Gehaltmenge des Tensids in der Gesamtmenge der wasserbasierten Tinte in einem Bereich von 1,3 Massenprozent bis 2,5 Massenprozent ist.

7. Wasserbasierte Tinte für eine Tintenstrahlaufzeichnung nach einem der Ansprüche 1 bis 6, ferner aufweisend winzige Harzpartikel mit einer Größe in einem Bereich von 5 nm bis 500 nm, bevorzugt in einem Bereich von 20 nm bis 300 nm oder besonders bevorzugt in einem Bereich von 30 nm bis 200 nm.

8. Wasserbasierte Tinte für eine Tintenstrahlaufzeichnung nach Anspruch 7, wobei die winzigen Harzpartikel Emulsionspartikel sind.

9. Wasserbasierte Tinte für eine Tintenstrahlaufzeichnung nach einem der Ansprüche 1 bis 8, ferner aufweisend einen Farbstoff.

10. Wasserbasierte Tinte für eine Tintenstrahlaufzeichnung nach Anspruch 1, ferner aufweisend winzige Harzpartikel mit einer Größe in einem Bereich von 5 nm bis 500 nm, bevorzugt in einem Bereich von 20 nm bis 300 nm oder besonders bevorzugt in einem Bereich von 30 nm bis 200 nm,
wobei das Tensid ferner ein Tensid auf Acetylenglykolbasis beinhaltet;
das wasserlösliche organische Lösungsmittel Propylenglykol beinhaltet; und
eine Gehaltmenge des wasserlöslichen organischen Lösungsmittels in der Gesamtmenge der wasserbasierten Tinte nicht weniger als 20 Massenprozent ist.

11. Wasserbasierte Tinte für eine Tintenstrahlaufzeichnung nach Anspruch 1, ferner aufweisend winzige Harzpartikel mit einer Größe in einem Bereich von 5 nm bis 500 nm, bevorzugt in einem Bereich von 20 nm bis 300 nm oder besonders bevorzugt in einem Bereich von 30 nm bis 200 nm,
wobei das Tensid ferner ein Tensid auf Acetylenglykolbasis beinhaltet;
das wasserlösliche organische Lösungsmittel 1,3-Butandiol beinhaltet; und
eine Gehaltmenge des wasserlöslichen organischen Lösungsmittels in der Gesamtmenge der wasserbasierten Tinte nicht weniger als 20 Massenprozent ist.

12. Wasserbasierte Tinte für eine Tintenstrahlaufzeichnung nach Anspruch 1, ferner aufweisend winzige Harzpartikel mit einer Größe in einem Bereich von 5 nm bis 500 nm, bevorzugt in einem Bereich von 20 bis 300 nm oder besonders bevorzugt in einem Bereich von 30 nm bis 200 nm,
wobei das wasserlösliche organische Lösungsmittel Propylenglykol beinhaltet und
wobei eine Gehaltmenge des wasserlöslichen organischen Lösungsmittels in der Gesamtmenge der wasserbasierten Tinte nicht weniger als 20 Massenprozent ist.

13. Wasserbasierte Tinte für eine Tintenstrahlaufzeichnung nach Anspruch 1, ferner aufweisend winzige Harzpartikel mit einer Größe in einem Bereich von 5 nm bis 500 nm, bevorzugt in einem Bereich von 20 nm bis 300 nm oder besonders bevorzugt in einem Bereich von 30 bis 200 nm,
wobei das wasserlösliche organische Lösungsmittel 1,3-Butandiol beinhaltet, und
wobei eine Gehaltmenge des wasserlöslichen organischen Lösungsmittels in der Gesamtmenge der wasserbasierten Tinte nicht weniger als 20 Massenprozent ist.

14. Tintenstrahlaufzeichnungsvorrichtung, aufweisend:
ein Tintenspeicherungsteil, welches die wasserbasierte Tinte für eine Tintenstrahlaufzeichnung nach einem der Ansprüche 1 bis 13 speichert; und
einen Tintenabgabemechanismus, welcher zum Abgeben der in dem Tintenspeicherteil gespeicherten Tinte konfiguriert ist.

15. Tintenstrahlaufzeichnungsvorrichtung nach Anspruch 14, ferner aufweisend einen Trocknungsmechanismus, welcher zum Trocknen eines durch die Tinte aufgezeichneten Aufzeichnungsteils konfiguriert ist.

16. Tintenstrahlaufzeichnungsverfahren, wobei das Verfahren den Schritt des Abgebens, auf ein Aufzeichnungsmedium, der wasserbasierten Tinte für eine Tintenstrahlaufzeichnung nach einem der Ansprüche 1 bis 13 beinhaltet.

17. Tintenstrahlaufzeichnungsverfahren nach Anspruch 16, wobei das Verfahren ferner den Schritt des Trocknens eines Aufzeichnungsteils des Aufzeichnungsmediums durch einen Trocknungsmechanismus beinhaltet.

18. Tintenstrahlaufzeichnungsverfahren nach Anspruch 17, wobei, in dem Schritt des Trocknens des Aufzeichnungsteils des Aufzeichnungsmediums, eine Trocknungstemperatur in einem Bereich von 20 °C bis 200 °C ist.

19. Tintenstrahlaufzeichnungsverfahren nach Anspruch 17, wobei, in dem Schritt des Trocknens des Aufzeichnungsteils des Aufzeichnungsmediums, eine Trocknungstemperatur in einem Bereich von 50 °C bis 100 °C ist.

## Revendications

1. Encre aqueuse pour enregistrement par jet d'encre, comprenant :
un solvant organique hydrosoluble ;
eau ; et
un tensioactif présentant, dans l'eau à 20 °C, une solubilité comprise entre 0,05 % en masse et 0,2 % en masse,
dans laquelle une teneur du tensioactif dans une quantité totale de l'encre aqueuse est comprise entre 1,2 % en masse et 2,7 % en masse, et
dans laquelle le tensioactif comprend au moins un tensioactif à base de polyoxyéthylène.

2. Encre aqueuse pour enregistrement par jet d'encre selon la revendication 1, dans laquelle le solvant organique hydrosoluble comprend au moins un composé choisi dans le groupe constitué de : propylène glycol, 1,3-butanediol, tripropylène-glycol et diéthylène-glycol.

3. Encre aqueuse pour enregistrement par jet d'encre selon l'une quelconque des revendications 1 ou 2, dans laquelle une teneur du solvant organique hydrosoluble dans la quantité totale de l'encre aqueuse est d'au moins 10 % en masse.

4. Encre aqueuse pour enregistrement par jet d'encre selon la revendication 3, dans laquelle la teneur du solvant organique hydrosoluble dans la quantité totale de l'encre aqueuse est d'au moins 20 % en masse.

5. Encre aqueuse pour enregistrement par jet d'encre selon la revendication 3, dans laquelle la teneur du solvant organique hydrosoluble dans la quantité totale de l'encre aqueuse est comprise entre 20 % en masse et 40 % en masse.

6. Encre aqueuse pour enregistrement par jet d'encre selon l'une quelconque des revendications 1 à 5, dans laquelle la teneur du tensioactif dans la quantité totale de l'encre aqueuse est comprise entre 1,3 % en masse et 2,5 % en masse.

7. Encre aqueuse pour enregistrement par jet d'encre selon l'une quelconque des revendications 1 à 6, comprenant en outre des particules fines de résine ayant une taille comprise entre 5 nm et 500 nm, de préférence entre 20 nm et 300 nm, ou plus préférablement entre 30 nm et 200 nm.

8. Encre aqueuse pour enregistrement par jet d'encre selon la revendication 7, dans laquelle les particules fines de résine sont des particules d'émulsion.

9. Encre aqueuse pour enregistrement par jet d'encre selon l'une quelconque des revendications 1 à 8, comprenant en outre un colorant.

10. Encre aqueuse pour enregistrement par jet d'encre selon la revendication 1, comprenant en outre des particules fines de résine ayant une taille comprise entre 5 nm et 500 nm, de préférence entre 20 nm et 300 nm, ou plus préférablement entre 30 nm et 200 nm,
dans laquelle le tensioactif comprend en outre un tensioactif à base de glycol acétylénique ;
dans laquelle le solvant organique hydrosoluble comprend du propylène glycol ; et
dans laquelle une teneur du solvant organique hydrosoluble dans la quantité totale de l'encre aqueuse est d'au moins 20 % en masse.

11. Encre aqueuse pour enregistrement par jet d'encre selon la revendication 1, comprenant en outre des particules fines de résine ayant une taille comprise entre 5 nm et 500 nm, de préférence entre 20 nm et 300 nm, ou plus préférablement entre 30 nm et 200 nm,
dans laquelle le tensioactif comprend en outre un tensioactif à base de glycol acétylénique ;
dans laquelle le solvant organique hydrosoluble comprend du 1,3-butanediol ; et
dans laquelle une teneur du solvant organique hydrosoluble dans la quantité totale de l'encre aqueuse est d'au moins 20 % en masse.

12. Encre aqueuse pour enregistrement par jet d'encre selon la revendication 1, comprenant en outre des particules fines de résine ayant une taille comprise entre 5 nm et 500 nm, de préférence entre 20 nm et 300 nm, ou plus préférablement entre 30 nm et 200 nm,
dans laquelle le solvant organique hydrosoluble comprend du propylène-glycol, et
dans laquelle une teneur du solvant organique hydrosoluble dans la quantité totale de l'encre aqueuse est d'au moins 20 % en masse.

13. Encre aqueuse pour enregistrement par jet d'encre selon la revendication 1, comprenant en outre des particules fines de résine ayant une taille comprise entre 5 nm et 500 nm, de préférence entre 20 nm et 300 nm, ou plus préférablement entre 30 nm et 200 nm,
dans laquelle le solvant organique hydrosoluble comprend du 1,3-butanediol, et
dans laquelle une teneur du solvant organique hydrosoluble dans la quantité totale de l'encre aqueuse est d'au moins 20 % en masse.

14. Appareil d'enregistrement par jet d'encre, comprenant :
une partie de stockage d'encre stockant l'encre aqueuse pour enregistrement par jet d'encre selon l'une quelconque des revendications 1 à 13 ; et
un mécanisme de décharge d'encre configuré pour décharger l'encre stockée dans la partie de stockage d'encre.

15. Appareil d'enregistrement par jet d'encre selon la revendication 14, comprenant en outre un mécanisme de séchage configuré pour sécher une partie d'enregistrement enregistrée par l'encre.

16. Procédé d'enregistrement par jet d'encre comprenant le déchargement, sur un support d'enregistrement, de l'encre aqueuse pour enregistrement par jet d'encre selon l'une quelconque des revendications 1 à 13.

17. Procédé d'enregistrement par jet d'encre selon la revendication 16, comprenant en outre le séchage d'une partie d'enregistrement du support d'enregistrement au moyen d'un mécanisme de séchage.

18. Procédé d'enregistrement par jet d'encre selon la revendication 17, dans lequel, lors du séchage de la partie d'enregistrement du support d'enregistrement, une température de séchage est comprise entre 20 °C et 200 °C.

19. Procédé d'enregistrement par jet d'encre selon la revendication 17, dans lequel, lors du séchage de la partie d'enregistrement du support d'enregistrement, une température de séchage est comprise entre 50 °C et 100 °C.
